# EUROPEAN PATENT SPECIFICATION

(11) **EP 3 020 523 B1**
(45) Date of publication and mention of the grant of the patent: **19.09.2018**
(21) Application number: 15194624.1
(22) Date of filing: 13.11.2015
(51) Int. Cl.: B27C 9/04, B27M 1/08, B23Q 3/157, B23Q 39/02, B23C 1/00, B23C 3/00, B23Q 1/01

(54) **MACHINING CENTRE**
BEARBEITUNGSZENTRUM
CENTRE D'USINAGE

(30) Priority: 14.11.2014 IT MO20140336
(43) Date of publication of application: 18.05.2016
(73) Proprietor: C.M.S. S.p.A., 24019 Zogno (BG) (IT)
(72) Inventor: TIRABOSCHI, Gianfranco, 24011 Almè (BG) (IT); FRANETTI, Massimo, 24068 Seriate (BG) (IT)
(74) Representative: Pandolfi, Paolo

(56) References cited:
- EP-A1- 1 815 954
- EP-A1- 2 025 480
- EP-A1- 2 394 764
- AT-U1- 11 347
- CN-A- 101 959 639
- DE-A1- 19 941 910
- DE-A1-102004 022 598
- DE-A1-102007 022 200
- DE-U- 1 948 170
- DE-U1-202007 017 768
- KR-A- 20140 043 104

## Description

### Background of the invention

The invention relates to a machining centre for machining elongated elements, in particular linear elements, i.e. elements having as a dimension of greater extent a longitudinal dimension, as per the preamble of claim 1. Such a machining centre is disclosed by document DE 1 948 170 U. Such elongated elements, after machining, are intended to form, typically, items intended for making furnishing elements such as, for example, doors and windows casings. The elongated elements are typically made of wood or similar materials.

In the field of making furnishing elements, the elongated elements are machined, by chip removal, along one or more of the flanks thereof, to make a desired profile. In particular, such elongated elements are machined longitudinally along the two vertical flanks thereof, i.e. parallel to a dimension of greater extent thereof. Also, in order to meet different energy efficiency needs of the buildings in which they will be installed, such elongated elements can be of different thicknesses, in general at least three.

Machining centres are known comprising a supporting element for grasping and advancing an elongated element to be machined. Such machining centres comprise a fixed crosspiece, which is positioned above the supporting element. Known machining centres further comprise an operating head, or spindle, typically an electric spindle, provided with a tool for machining the elongated element. In such machining centres it is necessary to have available a plurality of different shaped tools of great diameter in order to machine elongated elements of different thickness. This entails an increase in costs due to the purchase of such tools and low productivity of such machining centres because of the reduced cutting speed of tools of great diameter. Also, owing to the great diameter of such tools, it is necessary to have available a high-powered operating head, which entails greater consumption of electric energy.

In order to overcome the above mentioned drawbacks, machining centres have been made comprising a supporting element for grasping and advancing an elongated element to be machined, a fixed crosspiece, which is positioned above the supporting element, a first operating head, or spindle, typically an electric spindle, provided with a first tool, and a second operating head, or spindle, typically an electric spindle, provided with a second tool. The first operating head and the second operating head are respectively supported by a first side and by a second side of the crosspiece. The first and the second side extend parallel to one another and are positioned on opposite sides of the crosspiece at a certain distance from one another. In other words, the first side and the second side are opposite one another and positioned respectively upstream and downstream of an advancing direction of the elongated element. The distance that separates the first side from the second side is equal to the width of the crosspiece measured parallel to the advancing direction of the elongated element.

In use, the supporting element supports the elongated element to be machined, whereas the first operating head and the second operating head are arranged respectively on the first side and on the second side of the crosspiece so as to be substantially aligned on the advancing direction of the elongated element. Subsequently, the supporting element advances the elongated element along the advancing direction. The first operating head starts to machine, by the first tool, a flank of the elongated element. After the supporting element has made the elongated element travel the distance that separates the first operating head from the second operating head, i.e. the distance that separates the first tool from the second tool, also the second operating head starts to machine, by the second tool, the same flank of the elongated element. Thus, as the elongated element has reached the second operating head, and until the first operating head machines the elongated element, the first tool and the second tool machine simultaneously. The first tool and the second tool have a reduced diameter and respective conformations such as to make the desired profile in the flank of the elongated element. In particular, the first tool is shaped in such a manner as to profile a part of the profile of the elongated element that is common to the elongated elements of different thickness, whereas the second tool is shaped so as to profile the remaining part of the profile that can have a different height, depending on the thickness of the elongated element. The configuration of such known machining centres enables the costs to be reduced that are due to the purchase of the tools, because it is normally necessary to have only two tools available, which are appropriately handled by the respective operating heads, for machining elongated elements of different thicknesses. Further, owing to this configuration it is possible to have available, as said above, a first tool and a second tool of reduced diameter, which are thus less heavy, thus enabling the cutting speed of the tools to be increased and thus productivity of the machining centre to be increased compared with the machining centres disclosed initially.

Nevertheless, also such machining centres have significant drawbacks.

A first drawback is that such machining centres do not enable high productivity to be achieved. In fact, productivity is reduced because of the downtime required for the elongated element to travel the distance, measured parallel to the advancing direction of the elongated element, that separates the first operating head from the second operating head, i.e. the distance, measured parallel to the advancing direction of the elongated element, that separates the first tool from the second tool, before also the second operating head, by the second tool, can machine the elongated element.

A second drawback is that such machining centres are particularly expensive. In fact, the first side and the second side of the crosspiece require vast carpentry works, in particular each side has to be provided with respective guides, in order to be able to support respectively the first operating head and the second operating head.

A third drawback is that such machining centres are particularly bulky, in particular longitudinally. In fact, owing to the distance that separates the first operating head from the second operating head, such machining centres have to have a great longitudinal extent to enable the elongated element to be machined.

### Summary of the invention

An object of the invention is to improve machining centres, in particular machining centres for machining elongated elements intended for forming door and window casings.

A further object is to provide a machining centre that enables the productivity of known machining centres to be increased.

Another object also is to increase a machining centre that is more compact than known machining centres.

Another further object is to provide a machining centre that is cheaper to make than known machining centres.

Another object is to provide a machining centre that is particularly flexible.

Such objects and also others are achieved by a machining centre according to one or more of the claims set out below.

### Brief description of the drawings

The invention can be better understood and implemented with reference to the attached drawings, which illustrate an embodiment thereof by way of non-limiting example, in which:
Figure 1 is a schematic frontal view of a machining centre made according to the invention;
Figure 2 is a schematic side view of the machining centre of Figure 1 with some details removed;
Figure 3 is a schematic plan view of the machining centre of Figure 1 with some details removed;
Figure 4 is a schematic perspective view of a first operating head and of a second operating head included in the machining centre of Figure 1;
Figures 5, 6 and 7 are schematic plan views of the machining centre of Figure 1 in different operational configurations;
Figures 8 and 9 are schematic and enlarged plan views of respective tools included in the first operating head and in the second operating head in different operational configurations.

### Detailed description

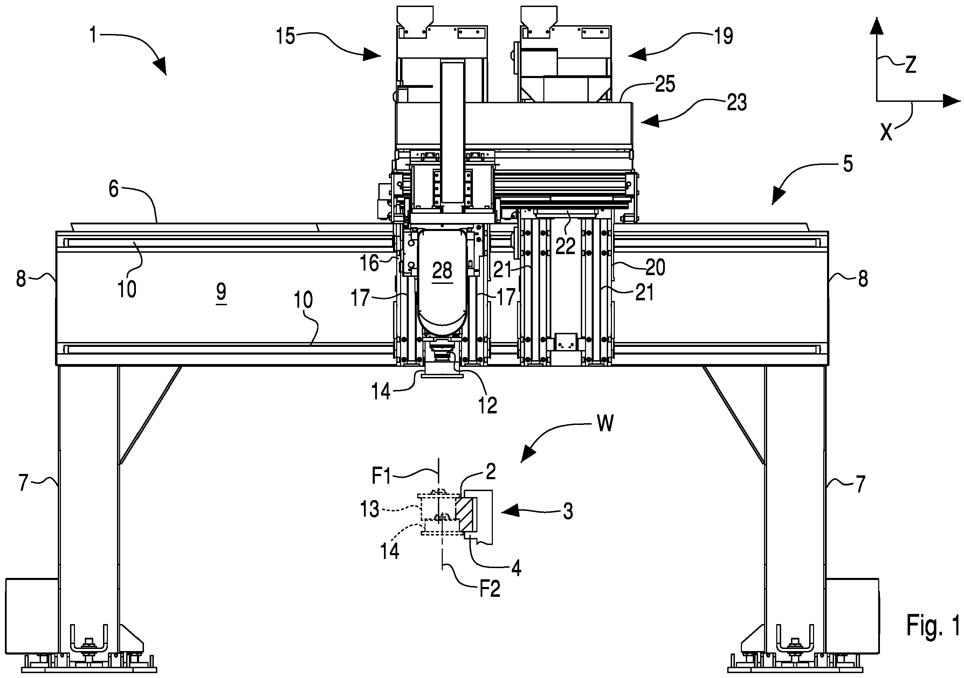

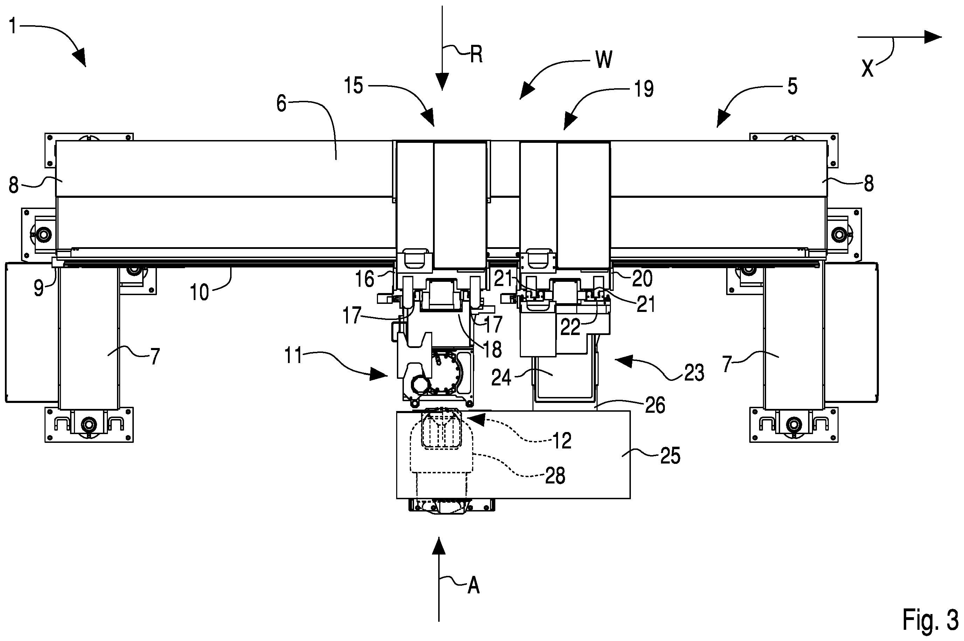

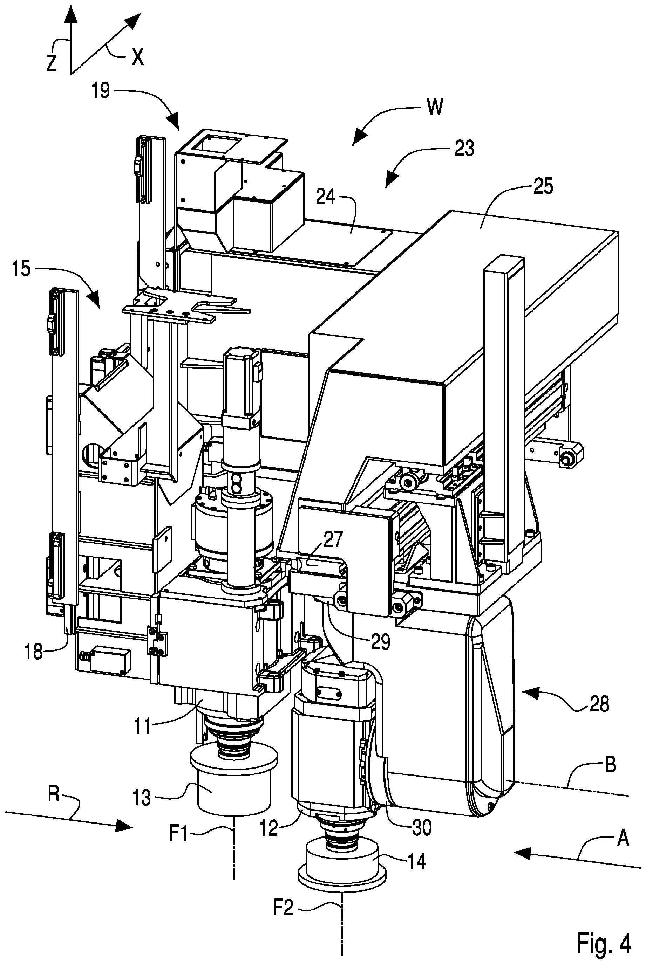

With reference to Figures 1 to 9, with 1 a machining centre has been indicated overall, in particular a machining centre for machining elongated elements 2. The elongated elements 2 are, in particular, linear elements having as the dimension of greatest extent a longitudinal dimension. Also, the elongated elements 2, which are generally made of wood or similar materials, are typically intended for forming, after machining, items such as door and window casings intended for the industry that makes furnishing elements.

The machining centre 1 comprises a supporting element 3 provided with one or more grasping elements 4, for example of the clamp type, for grasping in a releasable manner, and advancing, an elongated element 2.

In particular, the supporting element 3 is configured for advancing an elongated element 2 along an advancing direction A that is for example substantially horizontal.

The machining centre 1 is further provided with a portal structure 5.

The portal structure 5, which is of fixed type, comprises a crosspiece element 6, or beam, operationally positioned above the supporting element 3, extending along a first horizontal direction X which is transverse, in particular perpendicular, with respect to the advancing direction A. The portal structure 5 further includes a pair of uprights 7, extending along a second direction Z, which is substantially vertical, positioned at opposite ends 8 of the crosspiece element 6. The uprights 7 are configured for supporting, at a set height, the crosspiece element 6.

In this manner, in the embodiment shown, the portal structure 5 is of the closed type.

In one embodiment that is not shown, the portal structure 5 is of the open type, i.e. it is provided, in addition to the crosspiece element 6, only with one upright 7 positioned at one end 8 of the crosspiece element 6.

The latter is parallelpipedon-shaped and comprises a side 9 extending vertically.

Also, the crosspiece element 6 is provided with first guides 10 fixed to or obtained in the side 9. The first guides 10, for example of linear prismatic type, are two in number and extend parallel to the first direction X.

The machining centre 1 further comprises a first operating head 11, or spindle, typically an electric spindle, and a second operating head 12, or spindle, typically an electric spindle.

The first operating head 11 and the second operating head 12 are configured for rotating respectively a first tool 13 and a second tool 14, for example milling tools, for machining, by chip removal, the elongated element 2.

In particular, the first operating head 11 and the second operating head 12 are configured for rotating the first tool 13 and the second tool 14 around respectively a first axis F1 and a second axis F2.

Also, the machining centre 1 includes a first carriage 15, slidingly mounted on the first guides 10 of the crosspiece element 6, configured for supporting and moving in a controlled manner the first operating head 11 substantially parallel to the first direction X and to the second direction Z.

In particular, the first carriage 15 comprises a first slide 16 slidingly associated with the first guides 10. Fixed to the, or obtained in the, first slide 16, second guides 17 are provided. The second guides 17, for example of linear prismatic type, are two in number and extend parallel to the second direction Z.

In one embodiment of the invention, which is not shown, only one second guide 17 is provided, for example of linear prismatic type, extending parallel to the second direction Z.

The first carriage 15 further includes a second slide 18 slidingly associated with the second guides 17. On the second slide 18 the first operating head 11 is mounted.

The first carriage 15 further comprises first moving means, which is not shown, for moving in a controlled manner the first slide 16 along the first direction X and the second slide 18 along the second direction Z. In this manner, the first operating head 11 can be moved in a controlled manner parallel to the first direction X and to the second direction Z, i.e. it is an operating head with two controlled axes.

Further, the machining centre 1 includes a second carriage 19, which is also slidingly mounted on the first guides 10 of the crosspiece element 6, configured for supporting in a cantilever manner on the crosspiece element 6 the second operating head 12, and moving the latter in a controlled manner substantially parallel to the first direction X and to the second direction Z and for supporting the second operating head 12 in rotation around a first rotation axis C and a second rotation axis B.

In particular, the second carriage 19 comprises a third slide 20 slidingly associated with the first guides 10. Fixed to the, or obtained in the, third slide 20, third guides 21 are provided. The third guides 21, for example of linear prismatic type, are two in number and extend parallel to the second direction Z.

In one embodiment of the invention, which is not shown, only one third guide 21 is provided, for example of linear prismatic type, extending parallel to the second direction Z.

The second carriage 19 further includes a fourth slide 22 slidingly associated with the third guides 21. On the fourth slide 22 a box shaped support 23 is mounted, having an "L"-shaped in a plan view.

In particular, the support 23 comprises a first supporting portion 24, extending substantially parallel to the advancing direction A, mounted on the fourth slide 22, and a second supporting portion 25 fixed to an end portion 26 of the first supporting portion 24 and extending substantially perpendicularly with respect to the advancing direction A, the second operating head 12 being operationally supported below the second supporting portion 25.

In the embodiment shown, the second supporting portion 25 comprises a fourth guide 27, for example a prismatic linear guide 27, extending substantially parallel to the first direction X. The fourth guide 27 is configured for slidingly supporting the second operating head 12 along the first direction X with respect to the second supporting portion 25. The presence of the fourth guide 27 is particularly indicated if the machining centre 1 is installed on places having a width, measured parallel to the first direction X, that is reduced, and enables the second operating head 12 to reach a tool-change position avoiding the elongation of the crosspiece 6 in the first direction X.

Also, in the embodiment shown, the second supporting portion 25 comprises a further support 28 for rotatingly supporting the second operating head 12. In particular, the further support 28 comprises a first support 29 for rotatingly supporting the second operating head 12 around the first rotation axis C, which is substantially vertical and parallel to the second direction Z, and a second support 30 for rotatingly supporting the second operating head 12 around the substantially horizontal second rotation axis B.

Further, the second carriage 19 comprises second moving means that is not shown, for moving in a controlled manner the third slide 20 along the first direction X, the fourth slide 22 along the second direction Z, and for rotating the first support 29 around the first rotation axis C and the second support 30 around the second rotation axis B.

In this manner, the second operating head 12 can be moved in a controlled manner parallel to the first direction X, to the second direction Z, and around the first rotation axis C and the second rotation axis B, i.e. it is an operating head with four controlled axes.

The machining centre 1 further comprises a first tool magazine 31, intended for containing tools intended for being used by the first operating head 11, and a second tool magazine 32, intended for containing tools intended for being used by the second operating head 12. In use, the first operating head 11 and the second operating head 12 can access the respective tool magazine 31, 32 sliding along the crosspiece element 6.

It should be noted that the first operating head 11 and the second operating head 12 are slidingly supported, by respectively the first carriage 15 and the second carriage 19, on the same side 9 of the crosspiece element 6 and that the second operating head 12, owing to the particular conformation of the support 23, is supported in a cantilever manner on this side 9 such that, at least in one operational configuration W of the machining centre 1, the first operating head 11 and the second operating head 12 are positioned in sequence, i.e. they are substantially aligned, along a direction R which is substantially parallel to the advancing direction A of the elongated element 2 with respect to the crosspiece element 6 so as to be able to machine, substantially simultaneously, by respectively the first tool 13 and the second tool 14, a same longitudinal flank 33 of the elongated element 2 extending substantially parallel to the advancing direction A.

In particular, in the operational configuration W, the first operating head 11 is operationally positioned between the crosspiece element 6 and the second operating head 12.

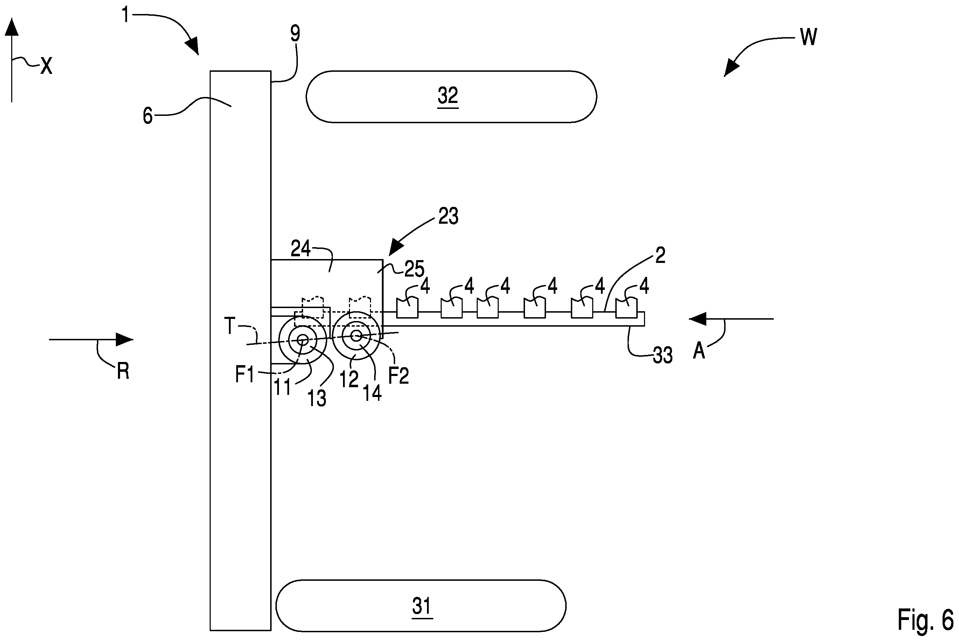

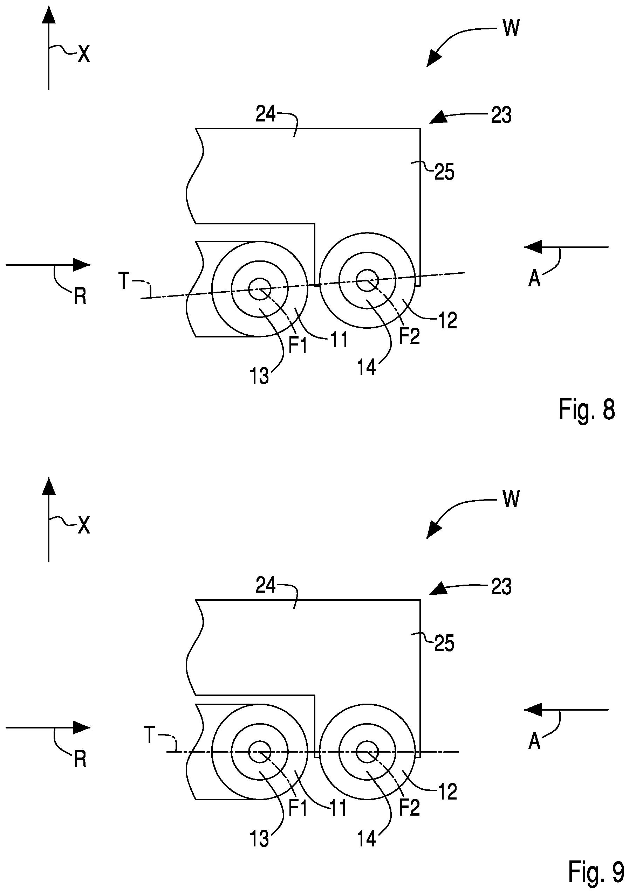

Also, in the operational configuration W, the first tool 13 and the second tool 14 can be so positioned that the respective rotation axes F1, F2 are positioned in sequence along an operational direction T which is transverse to the advancing direction A (Figures 6, 7 and 8), or which is substantially parallel to the advancing direction A (Figure 9). This makes it possible to use tools 13, 14 of reduced diameter.

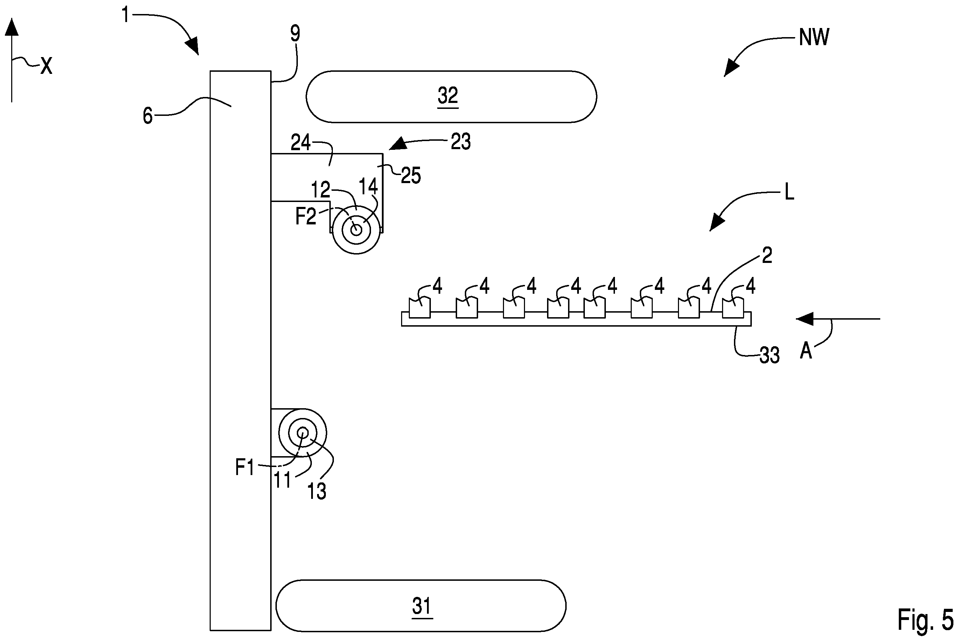

With particular reference to Figures 5 to 7, the operation of the machining centre 1 is disclosed below.

In an initial step, shown in Figure 5, the machining centre 1 is in a non-operational configuration NW, in which the first operating head 11 and the second operating head 12 are respectively provided with the first tool 13 and with the second tool 14 and are positioned, spaced apart from one another, along the crosspiece element 6. Further, in the initial step, an elongated element 2 is grasped, in a workpiece loading station L, by the supporting element 3.

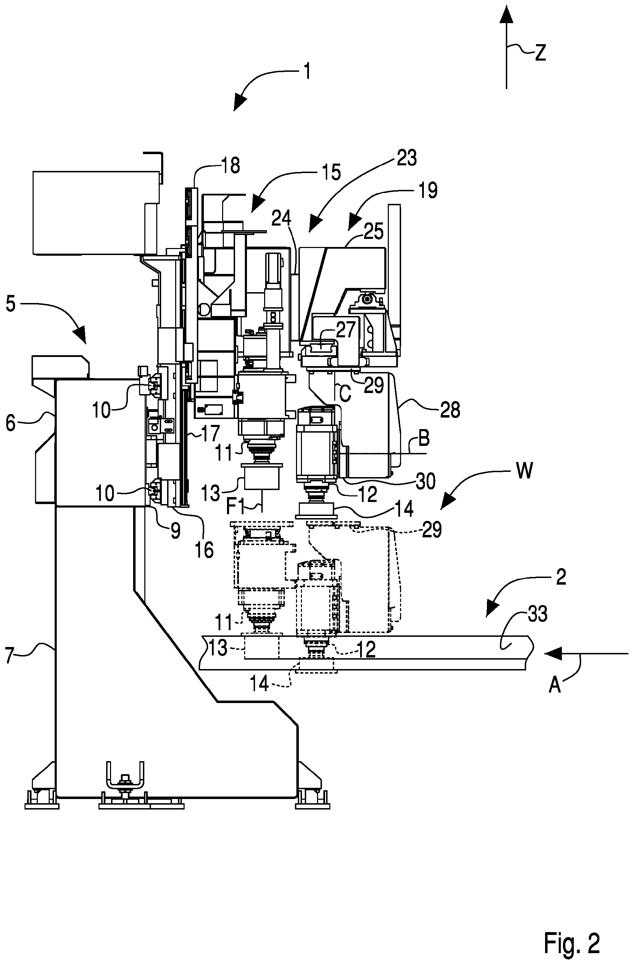

Subsequently, in an operational step, shown in Figure 6 and with a dashed line, in Figures 1 and 2, the machining centre 1 is in the operational configuration W, in which the first operating head 11 and the second operating head 12 are positioned in sequence, i.e. they are substantially aligned, along the direction R which is substantially parallel to the advancing direction A of the elongated element 2 with respect to the crosspiece element 6 so as to be able to machine, substantially simultaneously, the same flank 33 of the elongated element 2 by respectively the first tool 13 and the second tool 14.

In particular, in the operational configuration W shown in Figures 1, 2 and 6, the first tool 13 and the second tool 14 are positioned such that the respective rotation axes F1, F2 are positioned in sequence along an operational direction T which is transverse to the advancing direction A. During the operational step the supporting element 3 advances the elongated element 2 along the advancing direction A. Owing to the reduced space that separates the first operating head 11 and the second operating head 12, i.e. to the reduced gap between the axes F1, F2 of the first tool 13 and of the second tool 14, the latter machine substantially simultaneously for a time that is greater than that of known machining centres. In other words, the extreme closeness between the first operating head 11 and the second operating head 12, and thus between the first tool 13 and the second tool 14, enable the downtime to be reduced to a minimum that is necessary for the elongated element 2 to travel the distance, measured parallel to the advancing direction A of the elongated element 2, that separates the first operating head 11 from the second operating head 12, i.e. the distance, measured parallel to the advancing direction A of the elongated element 2, that separates the first tool 13 from the second tool 14, before also the first operating head 11, positioned downstream of the advancing direction A, can machine, by the first tool 13, the elongated element 2. This, together with the reduced diameter and weight of the first tool 13 and of the second tool 14, enables the productivity of the machining centre 1 to be increased significantly. It should be noted that the first tool 13 and the second tool 14 in addition to having a reduced diameter, have respective conformations such as to make the desired profile in the flank 33 of the elongated element 2. In particular, the first tool 13 is shaped so as to profile a part of the profile of the elongated element 2 that is common to the elongated elements of different thickness, whereas the second tool 14 is shaped so as to profile the remaining part of the profile that can have a different height depending on the thickness of the elongated element 2.

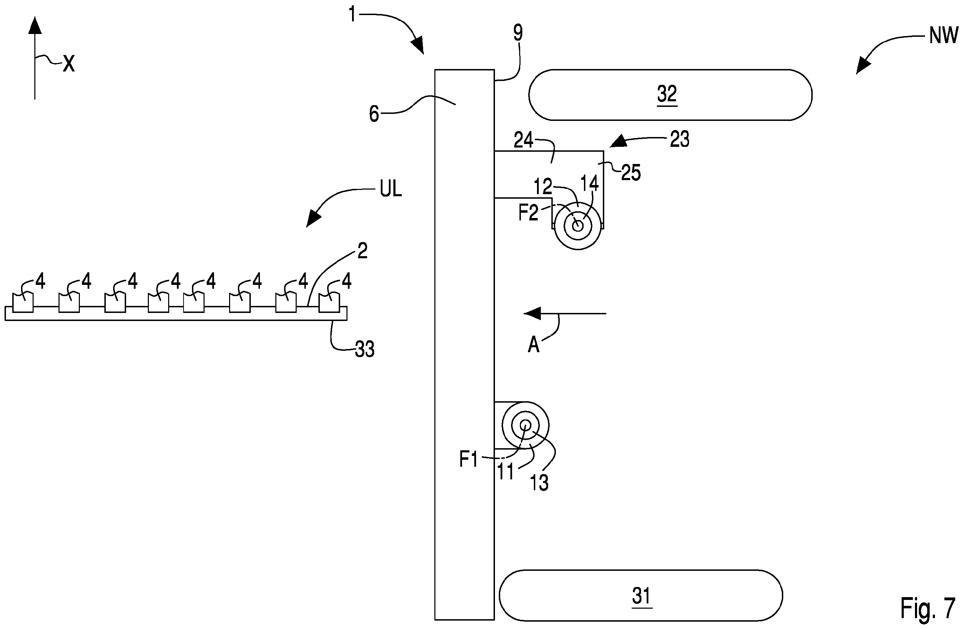

Also subsequently, in a final step, shown in Figure 7, the machining centre 1 is in the non-operational configuration NW, in which the first operating head 11 and the second operating head 12 are respectively provided with the first tool 13 and with the second tool 14 and are positioned, spaced apart from one another, along the crosspiece element 6. Further, in the final step, the elongated element 2 that has just been machined is unloaded, in a workpiece unloading station UL, from the supporting element 3.

In addition to the aforesaid advantage of the increase in the productivity of the machining centre 1 with respect to known machining centres, it should be noted how the machining centre 1 is particularly flexible.

In fact, with the machining centre 1 it is possible to make the first operating head 11 and the second operating head 12 machine in a particularly effective manner as, as disclosed above, simultaneously, and alternatingly, for example to perform further machining on the elongated element 2, for example head machining, drilling, etc. This is owing to the arrangement on the same side of the first operating head 11 and of the second operating head 12 that enables one head to be made to machine the elongated element 2 whilst the other head replaces, in so-called "masked time", its tool to perform a subsequent machining task, this avoiding, as on the other hand occurs in known machining centres, continuously moving backwards and forwards the elongated element 2 along the advancing direction A.

Also, the arrangement on the same side 9 of the first operating head 11 and of the second operating head 12 enables the costs of tooling the crosspiece element 6 to be reduced and the overall longitudinal dimensions of the machining centre 1 to be reduced.

Further, the machining centre 1 enables the costs to be reduced that are due to the purchase of the tools, inasmuch as it is necessary to have available only two tools, which are appropriately moved by the respective operating heads, for machining elongated elements 2 of different thicknesses.

In one embodiment of the invention, which is not shown, the crosspiece element is fixed, whereas the portal structure is movable along an advancing direction.

In another embodiment of the invention, which is not shown, the fourth guide is not present.

In another embodiment of the invention, which is not shown, the first operating head 11 and/or the second operating head 12 are respective operating heads with two, three, four or five controlled axes.

## Claims

1. Machining centre (1) for machining an elongated element (2), comprising:
- a supporting element (3) for supporting said elongated element (2);
- a first carriage (15) for supporting a first operating head (11) provided with a first tool (13) for machining said elongated element (2);
- a second carriage (19) for supporting a second operating head (12) provided with a second tool (14) for machining said elongated element (2); and
- a crosspiece element (6) positioned above said supporting element (3) for supporting said first carriage (15) and said second carriage (19);
- wherein said crosspiece element (6) is provided with first guides (10), said first carriage (15) and said second carriage (19) being both slidingly mounted on said first guides (10);
wherein said first carriage (15) and said second carriage (19) are slidingly supported on a same side (9) of said crosspiece element (6), **characterised in that** said first guides (10) are two in number; wherein the first carriage (15) and the second carriage (19) are both slidingly mounted to the two first guides (10); wherein in an operational configuration (W) of said machining centre (1) said first operating head (11) is operationally positioned between said crosspiece element (6) and said second operating head (12); wherein said second operating head (12) is supported by said second carriage (19) in a cantilever manner on said side (9) such that, in the operational configuration (W), said first operating head (11) and said second operating head (12) are positioned in sequence along a direction (R) substantially parallel to a relative advancing direction (A) of said elongated element (2) with respect to said crosspiece element (6) so as to be able to machine, substantially simultaneously, a same longitudinal flank (33) of said elongated element (2) by respectively said first tool (13) and said second tool (14).

2. Machining centre (1) according to claim 1, wherein in said operational configuration (W) said first tool (13) and said second tool (14) are positioned such that respective rotation axes (F1; F2) are positioned in sequence along an operational direction (T) which is transverse to said advancing direction (A).

3. Machining centre (1) according to claim 1, wherein in said operational configuration (W) said first tool (13) and said second tool (14) are positioned such that respective rotation axes (F1; F2) are positioned in sequence along an operational direction (T) which is substantially parallel to said advancing direction (A).

4. Machining centre (1) according to any one of claims 1 to 3, wherein said first operating head (11) and said second operating head (12) are respective operating heads with at least two controlled axes (X, Z, B, C).

5. Machining centre (1) according to any one of claims 1 to 4, wherein said crosspiece element (6) and said supporting element (3) are movable in relation to one another along said advancing direction (A).

6. Machining centre (1) according to any one of claims 1 to 5, and comprising a support (23) for supporting in a cantilever manner said second operating head (12) on said crosspiece element (6), said support (23) comprising a first supporting portion (24) that is slidingly connected to said crosspiece element (6) and a second supporting portion (25), fixed to an end portion (26) of said first supporting portion (24), connected to said second operating head (12).

7. Machining centre (1) according to claim 6, wherein said second operating head (12) is operationally positioned below said second supporting portion (25).

8. Machining centre (1) according to claim 6, or 7, wherein said first supporting portion (24) extends substantially parallel to said advancing direction (A) and said second supporting portion (25) extends substantially perpendicularly with respect to said advancing direction (A).

9. Machining centre (1) according to any one of claims 6 to 8, wherein said second supporting portion (25) comprises a guide (27) for slidingly supporting said second operating head (12) substantially perpendicularly with respect to said advancing direction (A).

## Patentansprüche

1. Bearbeitungszentrum (1) zum Bearbeiten eines langgestreckten Elementes (2) mit:
- einem Stützelement (3) zum Abstützen des langgestreckten Elementes (2);
- einem ersten Wagen (15) zum Abstützen eines ersten Arbeitskopfes (11), der mit einem ersten Werkzeug (13) zum Bearbeiten des langgestreckten Elementes (2) versehen ist;
- einem zweiten Wagen (19) zum Abstützen eines zweiten Bearbeitungskopfes (12), der mit einem zweiten Werkzeug (14) zum Bearbeiten des langgestreckten Elementes (2) versehen ist; und
- einem Querstückelement (6), das oberhalb des Stützelementes (3) positioniert ist, um den ersten Wagen (15) und den zweiten Wagen (19) abzustützen;
- wobei das Querstückelement (6) mit ersten Führungen (10) versehen ist, wobei der erste Wagen (15) und der zweite Wagen (19) beide gleitend auf den ersten Führungen (10) gehalten sind,
wobei der erste Wagen (15) und der zweite Wagen (19) auf einer selben Seite (9) des Querstückelementes (6) gleitend aufgenommen sind, **dadurch gekennzeichnet, dass**
die ersten Führungen (10) eine Anzahl von zwei sind; wobei der erste Wagen (15) und der zweite Wagen (19) beide gleitend auf den ersten Führungen (10) aufgenommen sind; wobei der erste Arbeitskopf (11) in einer Arbeitskonfiguration (W) des Bearbeitungszentrums (1) arbeitsmäßig zwischen dem Querstückelement (6) und dem zweiten Arbeitskopf (12) positioniert ist; wobei der zweite Arbeitskopf (12) von dem zweiten Wagen (19) in einer freitragenden Weise auf der genannten Seite (9) derart abgestützt ist, dass der erste Arbeitskopf (11) und der zweite Arbeitskopf (12) in der Arbeitskonfiguration (W) in Folge entlang einer Richtung (R) positioniert sind, die im Wesentlichen parallel zu einer relativen Vorschubrichtung (A) des langgestreckten Elementes (2) in Bezug auf das Querstückelement (6) ist, um so in der Lage zu sein, dieselbe Längsflanke (33) des langgestreckten Elementes (2) mittels des ersten Werkzeugs (13) und des zweiten Werkzeugs (14) im Wesentlichen gleichzeitig zu bearbeiten.

2. Bearbeitungszentrum (1) nach Anspruch 1, bei dem das erste Werkzeug (13) und das zweite Werkzeug (14) in der Arbeitskonfiguration (W) derart positioniert sind, dass betreffende Drehachsen (F1; F2) in Folge entlang einer Arbeitsrichtung (T) positioniert sind, die quer zu der Vorschubrichtung (A) ist.

3. Bearbeitungszentrum (1) nach Anspruch 1, bei dem das erste Werkzeug (13) und das zweite Werkzeug (14) in der Arbeitskonfiguration (W) derart positioniert sind, dass betreffende Drehachsen (F1; F2) in Folge entlang einer Arbeitsrichtung (T) positioniert sind, die im Wesentlichen parallel zu der Vorschubrichtung (A) ist.

4. Bearbeitungszentrum (1) nach irgendeinem der Ansprüche 1 bis 3, bei dem der erste Arbeitskopf (11) und der zweite Arbeitskopf (12) betreffende Arbeitsköpfe sind, die wenigstens zwei gesteuerte Achsen (X, Z, B, C) aufweisen.

5. Bearbeitungszentrum (1) nach irgendeinem der Ansprüche 1 bis 4, bei dem das Querstückelement (6) und das Stützelement (3) relativ zueinander entlang der Vorschubrichtung (A) beweglich sind.

6. Bearbeitungszentrum (1) nach irgendeinem der Ansprüche 1 bis 5, das ferner eine Aufnahme (23) zum Abstützen des zweiten Arbeitskopfes (12) auf dem Querstückelement (6) in einer freitragenden Weise aufweist, wobei die Aufnahme (23) einen ersten Aufnahmebereich (24) aufweist, der gleitend mit dem Querstückelement (6) verbunden ist, sowie einen zweiten Aufnahmebereich (25) aufweist, der an einem Endbereich (26) des ersten Aufnahmebereichs (24) befestigt ist, der mit dem zweiten Arbeitskopf (12) verbunden ist.

7. Bearbeitungszentrum (1) nach Anspruch 6, bei dem der zweite Arbeitskopf (12) arbeitsmäßig unterhalb des zweiten Aufnahmebereichs (25) positioniert ist.

8. Bearbeitungszentrum (1) nach Anspruch 6 oder 7, bei dem der erste Aufnahmebereich (24) sich im Wesentlichen parallel zu der Vorschubrichtung (A) erstreckt, und sich der zweite Aufnahmebereich (25) im Wesentlichen senkrecht zu der Vorschubrichtung (A) erstreckt.

9. Bearbeitungszentrum (1) nach irgendeinem der Ansprüche 6 bis 8, bei dem der zweite Aufnahmebereich (25) eine Führung (27) aufweist, um den zweiten Arbeitskopf (12) gleitend abzustützen, im Wesentlichen senkrecht in Bezug auf die Vorschubrichtung (A).

## Revendications

1. Centre d'usinage (1) pour usiner un élément allongé (2), comprenant:
- un élément de support (3) pour supporter ledit élément allongé (2);
- un premier chariot (15) pour supporter une première tête opératoire (11) pourvue d'un premier outil (13) pour usiner ledit élément allongé (2);
- un second chariot (19) pour supporter une seconde tête opératoire (12) pourvue d'un second outil (14) pour usiner ledit élément allongé (2); et
- un élément de traverse (6) positionné au-dessus dudit élément de support (3) pour supporter ledit premier chariot (15) et ledit second chariot (19);
- dans lequel ledit élément de traverse (6) est pourvu de premiers guides (10), ledit premier chariot (15) et ledit second chariot (19) étant tous deux montés de manière coulissante sur lesdits premiers guides (10);
dans lequel ledit premier chariot (15) et ledit second chariot (19) sont supportés de manière coulissante sur un même côté (9) dudit élément de traverse (6), **caractérisé en ce que** lesdits premiers guides (10) sont au nombre de deux; dans lequel le premier chariot (15) et le second chariot (19) sont tous deux montés de manière coulissante sur les deux premiers guides (10);
dans lequel dans une configuration opérationnelle (W) dudit centre d'usinage (1), ladite première tête opératoire (11) est positionnée de manière opérationnelle entre ledit élément de traverse (6) et ladite seconde tête opératoire (12);
dans lequel ladite seconde tête opératoire (12) est supportée par ledit second chariot (19) en porte-à-faux sur ledit côté (9) de telle sorte que, dans la configuration opérationnelle (W), ladite première tête opératoire (11) et ladite seconde tête opératoire (12) soient positionnées l'une à la suite de l'autre le long d'une direction (R) sensiblement parallèle à une direction d'avance relative (A) dudit élément allongée (2) par rapport audit élément de traverse (6) de manière à pouvoir usiner, de manière sensiblement simultanée, un même flanc longitudinal (33) dudit élément allongé (2) respectivement par ledit premier outil (13) et ledit second outil (14).

2. Centre d'usinage (1) selon la revendication 1, dans lequel dans ladite configuration opérationnelle (W), ledit premier outil (13) et ledit second outil (14) sont positionnés de telle sorte que des axes de rotation (F1; F2) respectifs soient positionnés l'un à la suite de l'autre le long d'une direction opérationnelle (T) qui est transverse à ladite direction d'avance (A).

3. Centre d'usinage (1) selon la revendication 1, dans lequel dans ladite configuration opérationnelle (W), ledit premier outil (13) et ledit second outil (14) sont positionnés de telle sorte que des axes de rotation (F1; F2) respectifs soient positionnés l'un à la suite de l'autre le long d'une direction opérationnelle (T) qui est sensiblement parallèle à ladite direction d'avance (A).

4. Centre d'usinage (1) selon l'une quelconque des revendications 1 à 3, dans lequel ladite première tête opératoire (11) et ladite seconde tête opératoire (12) sont des têtes d'actionnement respectives avec au moins deux axes commandés (X, Z, B, C).

5. Centre d'usinage (1) selon l'une quelconque des revendications 1 à 4, dans lequel ledit élément de traverse (6) et ledit élément de support (3) sont mobiles l'un par rapport à l'autre le long de ladite direction d'avance (A).

6. Centre d'usinage (1) selon l'une quelconque des revendications 1 à 5, et comprenant un support (23) pour supporter en porte-à-faux ladite seconde tête opératoire (12) sur ledit élément de traverse (6), ledit support (23) comprenant une première partie de support (24) qui est reliée de manière coulissante audit élément de traverse (6) et une seconde partie de support (25), fixée à une partie d'extrémité (26) de ladite première partie de support (24), reliée à ladite seconde tête opératoire (12) .

7. Centre d'usinage (1) selon la revendication 6, dans lequel ladite seconde tête opératoire (12) est positionnée de manière opérationnelle sous ladite seconde partie de support (25).

8. Centre d'usinage (1) selon la revendication 6 ou 7, dans lequel ladite première partie de support (24) s'étend de manière sensiblement parallèle à ladite direction d'avance (A) et ladite seconde partie de support (25) s'étend de manière sensiblement perpendiculaire par rapport à la direction d'avance (A).

9. Centre d'usinage (1) selon l'une quelconque des revendications 6 à 8, dans lequel ladite seconde partie de support (25) comprend un guide (27) pour supporter de manière coulissante ladite seconde tête opératoire (12) de manière sensiblement perpendiculaire par rapport à ladite direction d'avance (A).
